Europäisches Patentamt

(19) European Patent Office    (11) Publication number: **0 083 206**

Office européen des brevets    **B1**

(12) **EUROPEAN PATENT SPECIFICATION**

(45) Date of publication of patent specification: **26.03.86**    (51) Int. Cl.⁴: **B 60 G 3/26,** B 60 G 3/20, B 60 G 15/06

(21) Application number: **82306881.2**

(22) Date of filing: **22.12.82**

(54) Independent rear wheel suspension.

(30) Priority: **24.12.81 US 334332**

(43) Date of publication of application:
**06.07.83 Bulletin 83/27**

(45) Publication of the grant of the patent:
**26.03.86 Bulletin 86/13**

(84) Designated Contracting States:
**DE FR GB**

(56) References cited:
**DE-A-3 012 873**
**FR-A-2 202 790**
**FR-A-2 325 529**
**GB-A-2 007 610**
**US-A-4 046 403**
**US-A-4 280 717**

(73) Proprietor: **FORD MOTOR COMPANY LIMITED**
**Eagle Way**
**Brentwood Essex CM13 3BW (GB)**
㊷ **GB**

(73) Proprietor: **FORD-WERKE**
**AKTIENGESELLSCHAFT**
**Ottoplatz 2 Postfach 21 03 69**
**D-5000 Köln 21 (DE)**
㊷ **DE**

(73) Proprietor: **FORD FRANCE SOCIETE ANONYME**
**344 Avenue Napoléon Bonaparte B.P. 307**
**F-92506 Rueil Malmaison Cedex (FR)**
㊷ **FR**

(72) Inventor: **Rumpel, Manfred**
**4494 Chamberlain Drive**
**Birmingham Michigan 48010 (US)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates generally to independent wheel suspension systems for motor vehicles and more particularly to a strut type independent rear suspension for a front wheel drive vehicle.

Rear suspension systems have been constructed to control the attitude of the rear wheels in order to provide particular handling characteristics of the motor vehicle, for example roll understeer or roll oversteer, as well as to provide a soft ride free from road vibrations. Handling characteristics such as roll understeer, roll oversteer, or roll neutral steer during cornering of a motor vehicle are achieved by controlling the toe angle of one of the rear wheels during the jounce stroke of the suspension.

A vibration free ride is enhanced if the rear wheels are allowed to recess when the wheel hits a bump. However, both wheel recession and steering stability must be taken into account when designing a rear suspension. One way to take both factors into account is by controlling the toe angle of the wheel during its recession.

One way to control the toe angle of a wheel is with a suspension having two control arms substantially transverse to the longitudinal axis of the vehicle. The arms control the toe angle changes of the wheels as they shift positions. However, previous usage of the two transverse control arms in combination with a strut suspension necessitated the spring element in the strut suspension to be mounted about the strut.

In many strut suspensions, the spring has been positioned away from the strut and interposed between a transverse control arm and the chassis so that the strut upper mount can be constructed from softer rubber, and so that valuable cargo space or engine compartment space can be maximized.

In accordance with one aspect of the present invention, there is provided an independent rear wheel suspension for a vehicle comprising a chassis, a wheel support member, and transversely extending front and rear control arms pivotally connected at their inboard ends to said chassis and at their outboard ends to said wheel support member; characterised in that one of said control arms is connected to said chassis through two longitudinally spaced resilient bushings.

A suspension according to the present invention provides for increased cargo or engine space. Secondly, it allows the use of softer rubber in the strut upper mount.

Furthermore, it provides the above features in a suspension that can provide roll understeer, roll oversteer, or roll neutral steer, as well as wheel recession. The toe angle rate of change of the wheel during wheel recession is predetermined, in part, by the relative displacement properties of the two resilient bushings connecting one of the arms to the chassis.

The invention will now be described further, by way of example, with reference to the accompanying drawings, in which:

Figure 1 is a rear elevational view, partly in section, of a motor vehicle incorporating independent rear wheel suspensions for its left and right rear wheels according to the invention,

Figure 2 is an enlarged plan view of the left rear wheel suspension shown in Figure 1,

Figure 3 is an enlarged front elevation of the left rear wheel suspension, and

Figure 4 is a plan view similar to Figure 2 showing the wheel suspension during wheel recession.

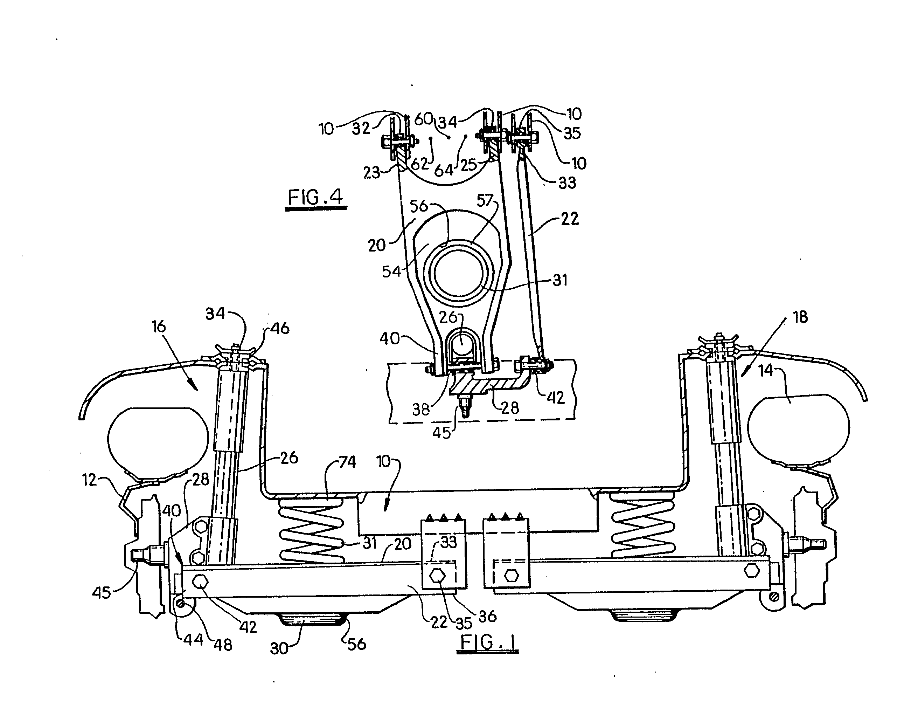

Referring now to Figure 1, a motor vehicle chassis (or unitized body and chassis) 10 is supported on left and right road wheels 12 and 14 by novel left and right independent wheel suspensions 16 and 18. Each wheel suspension 16 and 18 is identical except that one is a mirror image of the other; i.e., one is for the left side rather than for the right side. Since each independent suspension is the same, reference will only be made to the left wheel suspension 16.

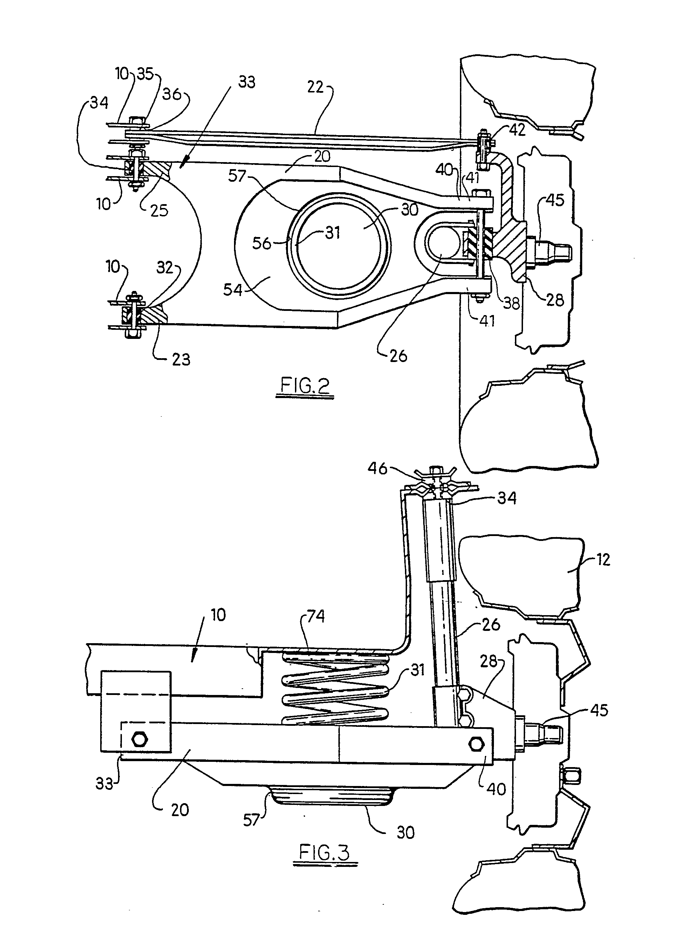

Generally, as shown in Figures 1, 2 and 3, the wheel suspension 16 includes a front transverse control arm 20, a rear transverse control arm 22, and a telescopic strut 26 which connects a wheel support member 28 to the motor vehicle chassis 10. Means are provided to pivotably connect the inner ends of the arms 20, 22 to the chassis 10 and their outer ends to the wheel support member 28, as will be described. A spring seat 30 is integrally formed in arm 20 and seats a coil spring 31 interposed between the seat 30 and chassis 10.

The front arm 20 has its inboard end 33 bifurcated into two stems 23 and 25 to receive two spaced apart bushings 32 and 34 which pivotably connect the arm 20 to chassis 10 about a horizontal axis. The rear arm 22 has a resilient bushing 35 at its inboard end 36 which pivotably connects the arm 22 to the chassis 10. An elastomeric bushing 38 pivotably connects the two prongs 41 of the outboard end 40 of the front control arm 20 to the wheel support member 28. Similarly, a resilient bushing 42 pivotably connects outboard end 44 of the rear control arm 22 to the wheel support member 28.

The wheel support member 28 has an integral wheel spindle 45 which rotatably mounts wheel 12. The spindle 45 is positioned longitudinally between the two stems 23 and 25 of the inboard end 33. Additionally, the spindle is positioned between the two prongs 41 of the outboard end 40 of arm 20 and is longitudinally aligned with bushing 38. The wheel support member 28 is rigidly connected to the telescopic shock absorbing strut 26. The upper end 34 of the strut 26 is pivotably connected through a resilient upper mount 46 to the chassis 10.

The spring seat 30, as shown in Figure 2, is integrally formed with the front control arm 20 at a mid-position between the inboard end 33 and outboard end 40 of the arm 20. The spring seat 30 is recessed downwardly from the central area 54 and connected thereto by a downwardly extending wall section 56. In general, the recessed seat 30 forms a pocket 57 which receives the lower end of coil spring 31 as it is seated against seat 30.

The top end 74 of coil spring 31 is seated against the chassis 10 so that the coil spring 31 normally exerts a downwardly biasing force on the spring seat 30 and control arm 20 when the vehicle is at rest.

When the control arms 20 and 22 undergo jounce movement, the arms 20 and 22 pivot upwardly about the inboard bushings 32, 34 and 35. As the arms 20 and 22 pivot upwardly, the spring seat 30 is moved upward with the arm 20 to compress coil spring 31.

Similarly, when the control arms 20 and 22 undergo rebound movement and pivot downwardly about inboard bushings 32, 34 and 35, the spring seat 30 moves downwardly and allows coil spring 31 to elongate.

Arms 20 and 22 and the other suspension components may be arranged to provide an increase in toe-in during jounce of wheel 12. Alternatively, no toe change or toe out may be provided during jounce of wheel 12. One skilled in the art can provide the appropriate geometry of the various suspension arms that will provide the desired toe angle changes during jounce.

The plurality of resilient bushings in the suspension system allow the road wheel to recess when subjected to a longitudinal force such as occurs when the wheel strikes a road obstacle (e.g., a tar strip in concrete pavement). As shown in Figure 4, the control arms 20 and 22 control the toe angle of the rear wheel 12 during recession of the wheel. Arms 20 and 22 and the other suspension components may be arranged to provide no toe change during recession of the wheel. Alternatively, the arms 20 and 22 may be arranged to provide toe-in as the wheel undergoes recession.

The control arm 20 controls the amount of recession due to its two spaced resilient bushings 32 and 34 without the use of a tie rod (or trailing arm). Bushings 32 and 34 are resilient to allow the arm 20 limited pivotable motion about a vertical axis. The amount of recession desired may be determined by the appropriate choice of elastomeric material for use in 32 and 34 and the size of bushings 48 and 52. Softer elastomers provide for more recession than harder elastomers. Similarly, larger bushings provide for more recession than smaller bushings. In addition, the amount of recession is determined by the spacing of the bushings 32 and 34. The closer the bushings are together, the more recession is allowed.

In addition to or in substitution of the geometrical structure of the control arms to obtain toe angle change during recession, toe angle change can be affected by the appropriate choice of bushings 32 and 34. Bushing 32 can be chosen to be identical or different from bushing 34 such that the ratio of the amount of lateral displacement per amount of laterally directed forces exerted on bushing 32 can be higher, lower or the same as the ratio for bushing 34. The choice can be determined by the desire to have toe out, no toe angle change, or toe in during wheel recession.

For example, if the bushings 32 and 34 are identical, stems 23 and 25 undergoes lateral displacement in equal amounts in opposite directions. Consequently, the effective pivot point of arm 20 with respect to chassis 10 during recession is midway between the two bushings 32 and 34 (as indicated by numeral 60 in Figure 4). On the other hand, for example, if bushing 32 is chosen to be stiffer (i.e., have a lower above-identified ratio) than bushing 34. The stem 23 undergoes less lateral displacement than stem 25 and the effective pivot point of arm 20 with respect to chassis 10 during recession is located closely to bushing 32. Conversely, if bushing 32 is chosen to be softer (i.e., have a higher above-identified ratio) than bushing 34, the effective pivot point of arm 20 with respect to chassis 10 during recession is located more closely to bushing 34.

The movement of the effective pivot point between arm 120 and chassis 110 affects the toe angle change of the suspension during recession. The more forward the effective pivot point is located, the tendency of the suspension to produce toe-in during recession is enhanced. Conversely, the more rearward the effective pivot point is located, the tendency of the suspension to produce toe-in is lessened.

More particularly, in the suspension 16 where the arms 20 and 22 have the same lateral length and are parallel to each other, as viewed from above or below, the location of the effective pivot point at a midpoint (as shown by number 60 in Figure 4) between the bushings 32 and 34 and aligned with bushing 48 produces no toe angle change to the wheel during recession as shown. If bushing 32 is stiffer than bushing 34, the pivot point is moved forward of the midpoint for example at location 62. The recessive motion of arm 20 then produces toe-in of the wheel.

There may be occasions when the geometry of the suspension produces excessive toe-in during recession which may be counteracted in part by locating the effective pivot point behind midpoint 60, for example at location 64. The effective pivot point can be located at point 64 by having bushing 34 being stiffer than bushing 32.

If the toe angle rate of change for a particular suspension is desired to be adjusted, the adjustment can be easily done by replacing one or both of the bushings 32 and 34 with a bushing of different characteristics. For example, if the bushings 32 and 34 are identical, bushing 34 can be replaced with a softer one, bushing 32 can be replaced with a stiffer one, or both mentioned replacements can be made. The above replacements give the suspension an increased toe-in rate or lessened toe-out rate. Vice versa, the bushing 34 can be replaced with a stiffer bushing, bushing 32 can be replaced by a softer bushing, or both mentioned replacements can be made. This aforementioned set of replacements produces a lessened toe-in rate.

As also shown in the figures, the position of the spring near the control arms rather than about strut 26 provides for increased cargo or engine space since the clearance about strut 26 can be minimized. Furthermore, because the spring loads arms 20 and 22 and not mount 46, softer rubber can be used in upper mount 46 than would otherwise be feasible.

In this fashion, the suspension as described provides for increased cargo or engine space, allows softer rubber to be used in the strut upper mount, and can be constructed to provide roll understeer, roll oversteer or roll neutral steer as well as wheel recession. In addition, wheel recession can be controlled in an efficient manner with a minimum number of parts and the toe angle ratio of change during recession can be controlled and adjusted.

**Claims**

1. An independent rear wheel suspension for a vehicle comprising a chassis, a wheel support member, and transversely extending front and rear control arms pviotably connected at their inboard ends to said chassis and at their outboard ends to said wheel support member; characterised in that one of said control arms (20) is connected to said chassis (10) through two longitudinally spaced resilient bushings (32, 34).

2. An independent rear wheel suspension as claimed in Claim 1, further comprising an upwardly extending telescopic shock absorber (26) having its lower end ridigly secured to said wheel support member (28) and its upper end to said chassis (10).

3. An independent rear wheel suspension as claimed in Claim 1 or 2, further comprising a spring seat (30) integrally formed with one of said front and rear control arms (20, 22), said spring seat (30) seating a spring (31) interposed between said spring seat (30) and said chassis (10).

4. An independent rear wheel suspension, as claimed in any preceding claim wherein said two longitudinally spaced bushings (32, 34) are constructed to allow said one arm (20) to pivot about a vertical axis as said wheel support member recesses to control in conjunction with said other transversely extending arm (22) the toe angle of said wheel support member (28) as said member recesses.

5. An independent rear wheel suspension as claimed in Claim 4, wherein said two longitudinally spaced resilient bushings (32, 34) are constructed to control the amount of wheel recession allowed for a given recessive force.

**Revendications**

1. Suspension de roue arrière indépendante pour un véhicule comprenant un châssis, un élément support de roue et des bras de commande avant et arrière s'étendant. transversalement, qui sont articulés au niveau de leurs extrémités intérieures sur ledit châssis et au niveau de leurs extrémités extérieures sur ledit élément support de roue, caractérisée en ce que l'un des bras de commande (20) est relié audit châssis (10) par l'intermédiaire de deux manchons élastiques (32, 34) espacées longitudinalement.

2. Suspension de roue arrière indépendante selon la revendication 1, comprenant, en outre, un amortisseur télescopique (26) s'étendant vers le haut, dont l'extrémité inférieure est fixée rigidement audit élément support de roue (28) et l'extrémité supérieure audit châssis (10).

3. Suspension de roue arrière indépendante selon la revendication 1 ou la revendication 2, comprenant, en outre, une portée de ressort (30) venue d'une seule pièce avec l'un desdits bras de commande avant et arrière (20, 22), ladite portée de ressort (30) recevant un ressort (31) interposé entre ladite portée de ressort (30) et ledit châssis (10).

4. Suspension de roue arrière indépendante selon l'une quelconque des revendications précédentes, dans laquelle lesdits deux manchons (32, 34) espacés longitudinalement sont construits de manière à permettre audit premier bras (20) de pivoter autour de l'axe vertical, lorsque ledit élément support de roue recule pour commander en combinaison avec ledit autre bras (22) s'étendant transversalement, l'angle de pincement dudit élément support de roue (28) lorsque cet élément recule.

5. Suspension de roue arrière indépendante selon la revendication 4, dans laquelle lesdits deux manchons élastiques (32, 34) espacés longitudinalement sont construits pour limiter l'amplitude du recul de la roue qui est admise pour une force de recul donnée.

**Patentansprüche**

1. Eine unabhängige Hinterradaufhängung für ein Fahrzeug, die ein Chassis, eine Radaufhängung sowie vordere und hintere Querlenker umfaßt, die an ihren innenliegenden Enden mit dem genannten Chassis und an ihren außenliegenden Enden mit der genannten Radaufhängung drehbar verbunden sind; dadurch gekennzeichnet, daß einer der genannten Querlenker (20) mit dem genannten Chassis (10) über zwei in Längsrichtung mit Abstand zueinander angeordnete Federbuchsen (32, 34) verbunden ist.

2. Eine unabhängige Hinterradaufhängung gemäß Anspruch 1, die außerdem einen nach oben verlaufenden, teleskopartigen Stoßdämpfer (26) umfaßt, dessen unteres Ende fest mit der genannten Radaufhängung (28) am genannten Chassis (10) verbunden ist.

3. Eine unabhängige Hinterradaufhängung gemäß Anspruch 1 oder Anspruch 2, die außerdem einen Federteller (30), der in einen der genannten vorderen und hinteren Querlenker (20, 22) integriert ist, umfaßt, wobei der genannte Federteller (30) eine zwischen dem genannten Federteller (30) und dem genannten Chassis (10) angeordnete Feder (31) aufnimmt.

4. Eine unabhängige Hinterradaufhängung gemäß irgendeinem der vorstehenden Ansprüche, wobei die genannten, in Längsrichtung mit Abstand zueinander angeordneten zwei Buchsen (32, 34) so ausgeführt sind, daß sich der genannte eine Querlenker (20), wenn die genannte Radaufhängung einfedert, um eine vertikale Achse bewegen kann, um somit in Verbindung mit dem genannten anderen Querlenker (22) den Spurwinkel der genannten Radaufhängung (28) bei deren Einfederung zu bestimmen.

5. Eine unabhängige Hinterradaufhängung gemäß Anspruch 4, wobei die genannten, in Längsrichtung mit Abstand zueinander angeordneten zwei Federbuchsen (32, 34) so ausgeführt sind, daß sich damit das Ausmaß der für eine gegebene Federkraft zulässigen Radeinfederung bestimmen läßt.

FIG.4

FIG. 1

0 083 206

FIG.2

FIG.3